# EUROPEAN PATENT APPLICATION

(11) **EP 4 848 220 A1**
(43) Date of publication of application: **02.12.2026**
(21) Application number: 26175618.3
(22) Date of filing: 30.04.2026
(51) Int. Cl.: G06V 10/143, G06V 30/413, G07D 7/1205, H04N 1/00, H04N 1/028, H04N 1/40, H04N 1/48

(54) **IMAGE READING DEVICE, IMAGE FORMING APPARATUS, IMAGE READING METHOD, AND SORTING APPARATUS**

(30) Priority: 30.05.2025 JP 2025091027
(71) Applicant: ETRIA Co., Ltd., Yokohama, Kanagawa 220-0011 (JP)
(72) Inventor: Nakamura, Shogo, Kanagawa, 220-0011 (JP); Hashimoto, Ayumu, Kanagawa, 220-0011 (JP)
(74) Representative: SSM Sandmair

(57) **Abstract**

An image reading device (130) includes a light emitter (24), an imager (28), and a color component amount estimation unit (310). The light emitter (24) is configured to emit invisible light to an object. The imager (28) is configured to receive the invisible light, reflected from the object or transmitted through the object, and captures an invisible image based on the invisible light received. The color component amount estimation unit (310) is configured to estimate a color component amount that absorbs invisible light, based on an invisible component of the invisible image of the object. The invisible component corresponds to a value related to a pixel value at a specified position in the invisible image.

## Description

### BACKGROUND

### Technical Field

The present disclosure relates to an image reading device, an image forming apparatus, an image reading method, and a sorting apparatus.

### Related Art

Recently, color reproduction technology has been proposed that reproduces colors of an output image to be equivalent to colors of an input image of a document when an image read by a device such as a scanner is output. As the colorant for reproducing black in printing, single-color black of a key plate is used in a text region and mixed-color black, which is a mixture of cyan, magenta, and yellow colorants, is used in a photograph region. The single-color black may be referred to as carbon black below. The mixed-color black may be referred to as CMY black below.

Japanese Unexamined Patent Application Publication No. 2009-65559 discloses reproduction of colors of a document by estimating an amount of a color component included in a colorant based on a difference in reflectance in a visible area between carbon black and CMY black that are read at a visible-light wavelength. The amount of the color component may be referred to as a color component amount below.

According to the technique described above, however, the reflectance of carbon black and the reflectance of CMY black may exhibit similar spectral characteristics in the visible area depending on the type of ink or toner or depending on the print density. In such a case, it is difficult to estimate the color component amount, based on the difference in reflectance.

### SUMMARY

In view of the foregoing, an object of the present disclosure is to enable the estimation of the color component amount even when carbon black and CMY black exhibit similar spectral characteristics in the visible area.

The present disclosure described herein provides an image reading device including a light emitter, an imager, and a color component amount estimation unit. The light emitter emits invisible light to an object. The imager receives the invisible light, reflected from the object or transmitted through the object, and captures an invisible image based on the invisible light received. The color component amount estimation unit estimates a color component amount that absorbs invisible light, based on an invisible component of the invisible image of the object. The invisible component corresponds to a value related to a pixel value at a specified position in the invisible image.

The present disclosure described herein provides an image forming apparatus including the above-described image reading device and an image forming device that prints image data that has been processed by the image reading device.

The present disclosure described herein provides a sorting apparatus including the above-described image reading device and a sorter that sorts the object, based on an image captured by the image reading device.

The present disclosure described herein provides an image forming apparatus including the image reading device and an image forming device to print image data processed by the image reading device.

The present disclosure described herein provides a sorting apparatus including the image reading device and a sorter to sort the object, based on an image captured by the image reading device.

The present disclosure described herein provides an image reading method to be executed by an image reading device. The method includes emitting invisible light to an object; receiving the invisible light, reflected from the object or transmitted through the object; capturing an invisible image based on the invisible light received; and estimating a color component amount that absorbs invisible light, based on an invisible component of the invisible image of the object. The invisible component corresponds to a value related to a pixel value at a specified position in the invisible image

The present disclosure enables the estimation of the color component amount even when carbon black and CMY black exhibit similar spectral characteristics in the visible area.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic sectional view of an image forming apparatus according to a first embodiment;
FIG. 2 is a schematic sectional view of a scanner;
FIG. 3 is a schematic sectional view of an automatic document feeder (ADF);
FIG. 4 is a diagram schematically illustrating a configuration around a document reading position;
FIG. 5 is a block diagram illustrating a hardware configuration of an image forming apparatus;
FIG. 6 is a graph illustrating spectral characteristics (absorptance) of a typical blank sheet and colorants;
FIG. 7 is a diagram illustrating a functional configuration of an image reading device according to the first embodiment;
FIG. 8 is a diagram illustrating data processing performed by a color component amount estimation unit according to the first embodiment;
FIG. 9 is a flowchart illustrating an example of a color component amount estimation process according to the first embodiment;
FIG. 10 is a diagram illustrating a functional configuration of an image reading device according to a second embodiment;
FIGs. 11A and 11B are diagrams illustrating data processing performed by a color component amount estimation unit according to the second embodiment;
FIGs. 12A, 12B, and 12C are graphs illustrating examples of estimated color component amounts;
FIG. 13 is a flowchart illustrating an example of a color component amount estimation process according to the second embodiment;
FIG. 14 is a diagram illustrating a functional configuration of an image reading device according to a third embodiment;
FIG. 15 is a graph illustrating an example of a color component composition ratio of each recording material;
FIGs. 16A, 16B, 16C, and 16D are diagrams respectively illustrating examples of a visible image, an invisible image, an image with added parts highlighted generated from the visible image and the invisible image, and an image with added parts removed generated from the visible image and the invisible image;
FIGs. 17A, 17B, 17C, and 17D are diagrams illustrating examples of read images of a genuine product and counterfeits;
FIGs. 18A, 18B, and 18C are graphs illustrating the number of pixels whose K value is equal to or greater than a predetermined threshold for each region;
FIG. 19 is a diagram illustrating a functional configuration of an image reading device according to a fourth embodiment;
FIGs. 20A and 20B are diagrams illustrating an example of a configuration of a sorting apparatus according to a fifth embodiment;
FIG. 21A is a diagram illustrating an example of a captured image and FIG. 21B is a graph illustrating an example of estimated color component amounts; and
FIG. 22 is a diagram illustrating an example of a screen displaying an identification result.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An image reading device, an image forming apparatus, an image reading method, and a sorting apparatus according to embodiments will be described below with reference to the accompanying drawings.

### First Embodiment

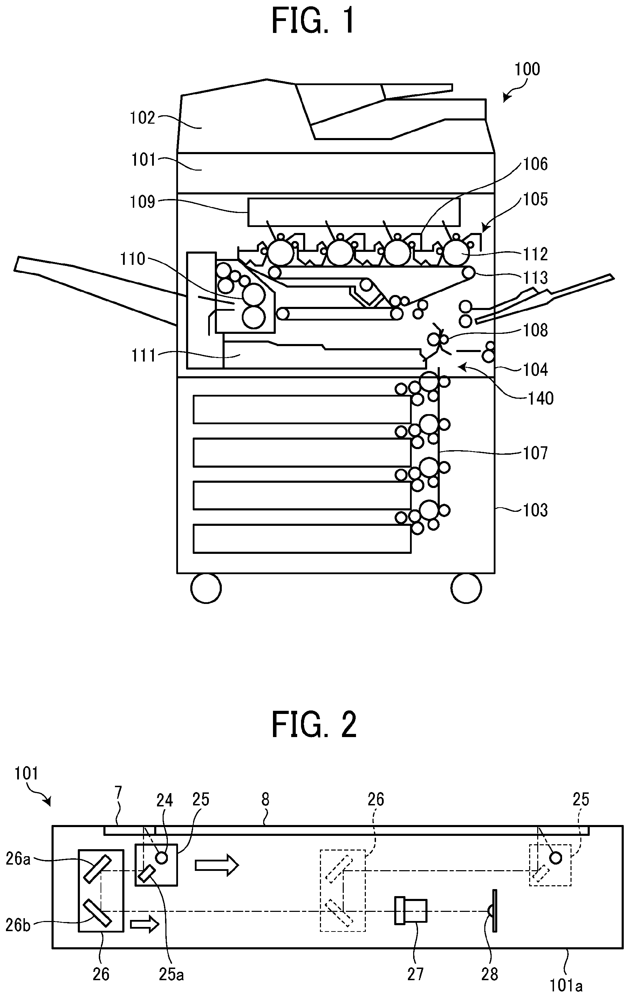

FIG. 1 is a schematic sectional view of an image forming apparatus 100 according to a first embodiment. The image forming apparatus 100 is a multifunction peripheral (MFP) having at least two functions among a copy function, a printer function, a scanner function, and a facsimile function.

As illustrated in FIG. 1, the image forming apparatus 100 includes a sheet feeder 103, an apparatus body 104, a scanner 101, and an ADF 102.

The image forming apparatus 100 includes a plotter 140 inside the apparatus body 104. The plotter 140 is an example of an image forming device. The plotter 140 includes an image formation section 105 of a tandem system, registration rollers 108, an optical writing device 109, a fixing device 110, and a duplex tray 111. The registration rollers 108 feed a recording sheet from the sheet feeder 103 to the image formation section 105 along a conveyance path 107.

The image formation section 105 includes four photoconductor drums 112 arranged side by side to correspond to colorants of four colors of yellow (Y), magenta (M), cyan (C), and black or key plate (K). Each of the photoconductor drums 112 is provided with image formation components therearound which include a charger, a developing device 106, a transfer device, a cleaner, and a charge neutralizer.

An intermediate transfer belt 113, stretched around a drive roller and a driven roller, is disposed and nipped between the transfer devices and the respective photoconductor drums 112.

In the image forming apparatus 100 of the tandem system thus configured, the scanner 101 reads a document, which is an object, fed from the ADF 102 to obtain a read document image. Based on the read document image, the optical writing device 109 performs optical writing on the photoconductor drums 112 for the respective colors to form respective latent images. In the image forming apparatus 100, the developing device 106 develops the latent images with toner of the respective colors to form respective toner images. The transfer device transfers the toner images onto the intermediate transfer belt 113 in order of yellow, magenta, cyan, and black, for example (primary transfer). A full-color image in which four colors are superimposed together in the primary transfer is transferred onto a recording sheet supplied from the sheet feeder 103 (secondary transfer), and is fixed on the recording sheet by the fixing device 110. The recording sheet is then ejected. In this manner, the image forming apparatus 100 forms the full-color image on the recording sheet. The object is not limited to a document and may be any target that is readable with the scanner 101.

The scanner 101 will be described below.

FIG. 2 is a schematic sectional view of the scanner 101. As illustrated in FIG. 2, the scanner 101 includes a first carriage 25, a second carriage 26, an imaging lens 27, and an imager 28, which are disposed inside a body frame 101a of the scanner 101.

Inside the body frame 101a of the scanner 101, a first rail and a second rail extend in a sub-scanning direction, which is the left-right direction in FIG. 2. The first rail includes two rails disposed with a predetermined space therebetween in a main-scanning direction perpendicular to the sub-scanning direction. Specifically, the main scanning direction is a vertical direction on the paper of FIG. 2. The second rail has substantially the same configuration as the first rail.

The first carriage 25 is slidably attached to the first rail. The first carriage 25 is reciprocally movable in the sub-scanning direction between a position indicated by a solid line and a position indicated by a dashed line in FIG. 2, by a drive motor via a first carriage drive wire. The first carriage 25 includes a light source 24 and a first mirror member 25a. The light source 24 is an example of a light emitter.

The second carriage 26 is slidably attached to the second rail. The second carriage 26 is reciprocally movable in the sub-scanning direction between a position indicated by a solid line and a position indicated by a dashed line in FIG. 2, by a drive motor via a second carriage drive wire. The second carriage 26 includes a second mirror member 26a and a third mirror member 26b.

In the case of sheet-through reading using the ADF 102, the first carriage 25 and the second carriage 26 stop at the respective positions indicated by the solid lines in FIG. 2, and the scanner 101 reads a document conveyed by the ADF 102. In the case of flatbed reading in which a document placed on a contact glass 8 is read, the first carriage 25 and the second carriage 26 move in the sub-scanning direction at a speed ratio of 2:1 and the document is read. In flatbed reading, with such a relationship between the moving speeds, an optical path length of light from the document surface to the imaging lens 27 is kept constant even when the first carriage 25 and the second carriage 26 move.

Reflected light from the document is incident onto the imaging lens 27 through a slit glass 7, the contact glass 8, and the mirror members. The imaging lens 27 focuses the reflected light onto the imager 28 to form an image on the imager 28. The imager 28 includes imaging elements such as charge-coupled devices (CCDs). The imager 28 performs photoelectric conversion on a reflected light image of the document formed through the imaging lens 27 to obtain an analog image signal. The imager 28 performs analog-to-digital conversion on the analog image signal to obtain a digital image signal, which is a read image, and outputs the digital image signal. The digital image signal may be referred to as image data or an image below.

The ADF 102 mounted on the scanner 101 will be described below.

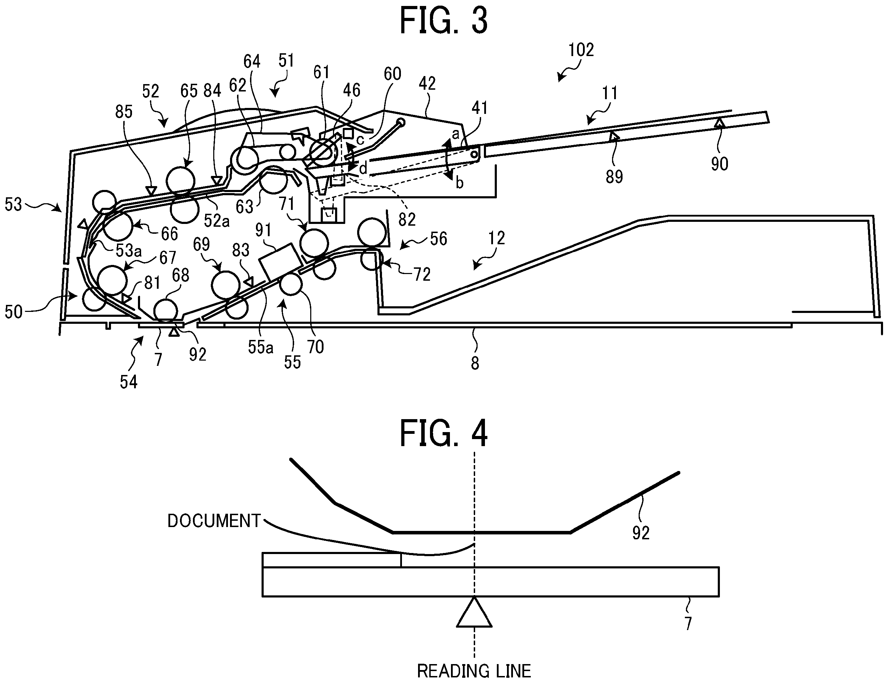

FIG. 3 is a schematic sectional view of the ADF 102. As illustrated in FIG. 3, the ADF 102 includes a document tray 11 on which a document is placed. The document tray 11 includes a movable document table 41 and a pair of side guide plates 42. The movable document table 41 rotates about a proximal end thereof in directions a-b in FIG. 3. The pair of side guide plates 42 align the document in the left-right direction with respect to the direction in which the document is fed. With the rotation of the movable document table 41, the leading edge of the document in the document feeding direction is adjusted to an appropriate height.

The document tray 11 has document length detection sensors 89 and 90 spaced apart in the document feeding direction. The document length detection sensors 89 and 90 detect whether the orientation of the document is portrait or landscape. Examples of the document length detection sensors 89 and 90 include reflective sensors that perform detection in a noncontact manner by optical means, and contact actuator-type sensors.

The pair of side guide plates 42 is slidable in the left-right direction with respect to the document feeding direction on one side thereof to allow various-sized documents to be placed on the document tray 11.

The pair of side guide plates 42 is provided with, on the fixed side thereof, a set feeler 46 that rotates in response to placement of a document. A document placement sensor 82 is provided at the lowermost position on a movement trajectory of the tip of the set feeler 46 to detect placement of a document on the document tray 11. That is, the document placement sensor 82 detects whether a document is placed on the ADF 102, based on whether the set feeler 46 rotates to be separated from the document placement sensor 82.

The ADF 102 includes a conveyor 50 including a document separating and feeding section 51, a pullout section 52, a turn section 53, a first reading and conveying section 54, a second reading and conveying section 55, and a document ejecting section 56. The conveyor 50 includes conveyance rollers that are driven to rotate by one or more conveyance motors.

The document separating and feeding section 51 includes a pickup roller 61, a document feed belt 62, and a reversing roller 63. The pickup roller 61 is disposed in the vicinity of a document feed port 60 from which a document is fed. The document feed belt 62 and the reversing roller 63 are disposed to face each other with a conveyance path therebetween.

The pickup roller 61 is supported by a support arm member 64 attached to the document feed belt 62 to move up and down in directions c-d in FIG. 3 via a cam mechanism between a contact position where the pickup roller 61 comes into contact with a document bundle and a separate position where the pickup roller 61 is separate from the document bundle. The pickup roller 61 picks up several documents from the documents placed on the document tray 11 at the contact position. Ideally, the pickup roller 61 picks up a single document.

The document feed belt 62 rotates in the document feeding direction. The reversing roller 63 rotates in the opposite direction to the document feeding direction. When multiple documents are fed, the reversing roller 63 rotates in the opposite direction to the rotation direction of the document feed belt 62. When the reversing roller 63 is in contact with the document feed belt 62 or when a single document is fed, the reversing roller 63 rotates together with the document feed belt 62 by the action of a torque limiter. Consequently, feeding of multiple documents is prevented.

The pullout section 52 includes pullout rollers 65 that are a pair of rollers disposed with a conveyance path 52a therebetween. The pullout section 52 performs primary edge alignment, which is so-called skew correction, on the document fed at driving timings of the pullout rollers 65 and the pickup roller 61, and pulls out and conveys the aligned document.

The turn section 53 includes a pair of intermediate rollers 66 and a pair of reading entrance rollers 67, each of which is disposed with a conveyance path 53a therebetween. The conveyance path 53a curves from top toward bottom. In the turn section 53, the intermediate rollers 66 convey the pulled-out and conveyed document along the curved conveyance path 53a to turn the document. The reading entrance rollers 67 convey the document to the vicinity of the slit glass 7, which is at the reading position or the imaging position, such that the front side of the document faces downward.

The document conveying speed from the pullout section 52 to the turn section 53 is set to be higher than the document conveying speed in the first reading and conveying section 54. This reduces the time taken to convey the document to the first reading and conveying section 54.

The first reading and conveying section 54 includes a first read roller 68 and first reading exit rollers 69. The first read roller 68 is disposed to face the slit glass 7. The first reading exit rollers 69 are located in a conveyance path 55a downstream of the reading. In the first reading and conveying section 54, the first read roller 68 conveys the document that has been conveyed to the vicinity of the slit glass 7, while keeping the front side of the document in contact with the slit glass 7. At this time, the scanner 101 reads the document through the slit glass 7. At this time, the first carriage 25 and the second carriage 26 of the scanner 101 are stopped at the respective home positions. In the first reading and conveying section 54, the first reading exit rollers 69 further convey the document that has been read.

FIG. 4 is a diagram schematically illustrating a configuration around the document reading position. In FIG. 4, the document is conveyed from left to right.

As illustrated in FIG. 4, the ADF 102 includes a background member 92 at a position facing the slit glass 7. The background member 92 serves as a background during imaging. The background member 92 is, for example, white and is used for shading correction. The document is conveyed between the slit glass 7 and the background member 92. The scanner 101 reads an image at a position of a reading line illustrated in FIG. 4.

The second reading and conveying section 55 includes a second reader 91, a second read roller 70, and second reading exit rollers 71. The second reader 91 reads the back side of the document. The second read roller 70 is disposed to face the second reader 91 with the conveyance path 55a therebetween. The second reading exit rollers 71 are disposed downstream from the second reader 91 in the conveyance direction.

In the second reading and conveying section 55, the second reader 91 reads the back side of the document after the front side of the document is read. After the back side of the document is read, the second reading exit rollers 71 convey the document toward a document ejection port. The second read roller 70 functions to prevent or reduce floating of the document at the second reader 91 and also functions as a reference white area when the second reader 91 acquires shading data. When duplex reading is not performed on the document, the document passes through the second reader 91.

The document ejecting section 56 is provided with a pair of document ejection rollers 72 in the vicinity of the document ejection port. The pair of document ejection rollers 72 ejects the document that has been conveyed by the second reading exit rollers 71, onto a document ejection tray 12.

The ADF 102 is provided with various sensors such as a contact sensor 84, a registration sensor 81, and a document ejection sensor 83 along the document conveyance path. The various sensors are used for conveyance control related to a document conveying distance and a document conveying speed, for example. A document width sensor 85 is disposed between the pullout rollers 65 and the intermediate rollers 66.

A hardware configuration of the image forming apparatus 100 will be described below.

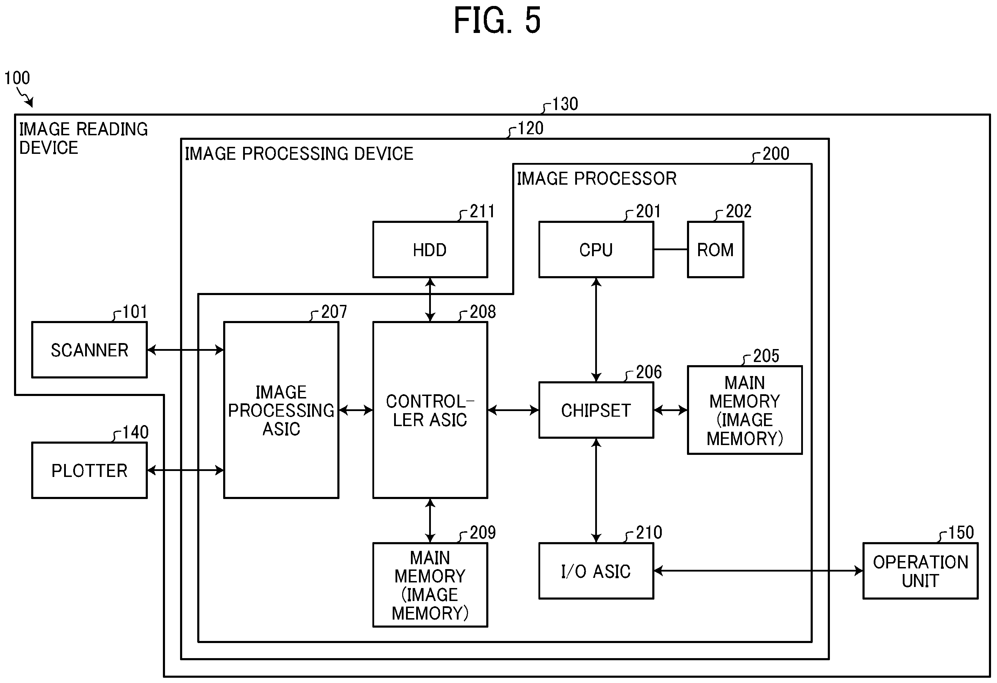

FIG. 5 is a block diagram illustrating a hardware configuration of the image forming apparatus 100. As illustrated in FIG. 5, the image forming apparatus 100 includes the scanner 101, an image processing device 120, the plotter 140, and an operation unit 150. The scanner 101, the image processing device 120, and the operation unit 150 are included in an image reading device 130 according to the present embodiment.

The scanner 101 has a function of reading an image to be subjected to a copy process or an image to be output to an external interface. The image processing device 120 performs predetermined processing, for example, image processing on the image read by the scanner 101, and outputs the image-processed image data to the plotter 140. The plotter 140 has a function of printing image data. The image processing device 120 includes an image processor 200 and a hard disk drive (HDD) 211.

The operation unit 150 includes a touch panel display screen, for example. The operation unit 150 receives, from a user via operation buttons or touch inputs, input operations for various settings and for executing reading, specifically, starting scanning, and transmits corresponding operation signals to the image processing device 120 via an input/output application-specific integrated circuit (I/O ASIC) 210. The operation unit 150 receives various types of display information from the image processing device 120 and displays the various types of display information on the display screen.

The image processor 200 includes a central processing unit (CPU) 201, a read-only memory (ROM) 202, a main memory 205, a chipset 206, an image processing ASIC 207, a controller ASIC 208, a main memory 209, and the I/O ASIC 210. "ASIC" is an acronym for "application-specific integrated circuit".

The CPU 201 controls the image forming apparatus 100. The main memory 205 is used as a work area to which a program used by the CPU 201 to control the image forming apparatus 100 is deployed. The main memory 205 is used as an image memory for temporarily storing image data to be handled, for example. The chipset 206 is used together with the CPU 201 to control access to the main memory 205 from the controller ASIC 208 and the I/O ASIC 210.

The image processing ASIC 207 performs image processing on an image read by the scanner 101, and outputs the resulting image data to the controller ASIC 208. The image processing ASIC 207 performs image processing on the image data input from the controller ASIC 208 to make the image data printable by the plotter 140 and transmits the image data to the plotter 140 in accordance with a print timing of the plotter 140.

The controller ASIC 208 performs processing such as rotation or editing of the image data handled by the image forming apparatus 100. The controller ASIC 208 stores the image data in the HDD 211, and transmits and receives the image data to and from the image processing ASIC 207. The main memory 209 is used as an image memory when the controller ASIC 208 performs image processing. The HDD 211 is used for temporarily storing image data.

The I/O ASIC 210 is an external interface for providing additional functions to the image forming apparatus 100. For example, the I/O ASIC 210 includes a network interface, interfaces for various devices, a hardware accelerator for accelerating image processing, and an encryption processing circuit. The various devices include a device including Universal Serial Bus (USB), a Secure Digital (SD) card, a Serial Peripheral Interface (SPI), or an Inter-Integrated Circuit (I2C), the document width sensor 85, and the operation unit 150.

Functions exerted by the image reading device 130 will be described below.

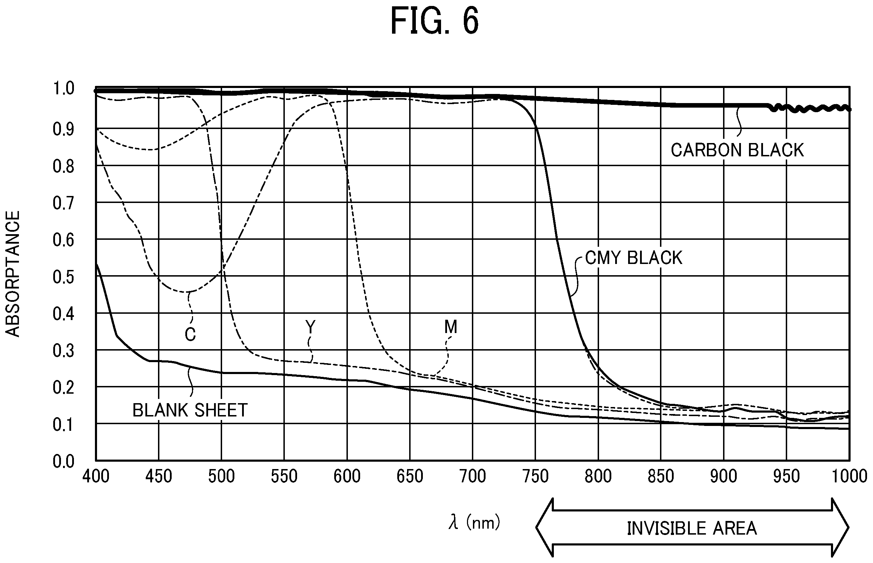

FIG. 6 is a graph illustrating spectral characteristics of a typical blank sheet and colorants. The spectral characteristics in this case are absorptance. As illustrated in FIG. 6, in an invisible area of a wavelength of 750 nm or longer, CMY black has small absorptance and carbon black has large absorptance. Even when carbon black and CMY black exhibit almost the same spectral characteristics in a visible area, the use of an invisible image that is an image of an object captured in the invisible area allows the image reading device 130 to estimate with high accuracy the amount of a color component included in a colorant. The amount of the color component may be referred to as a color component amount below.

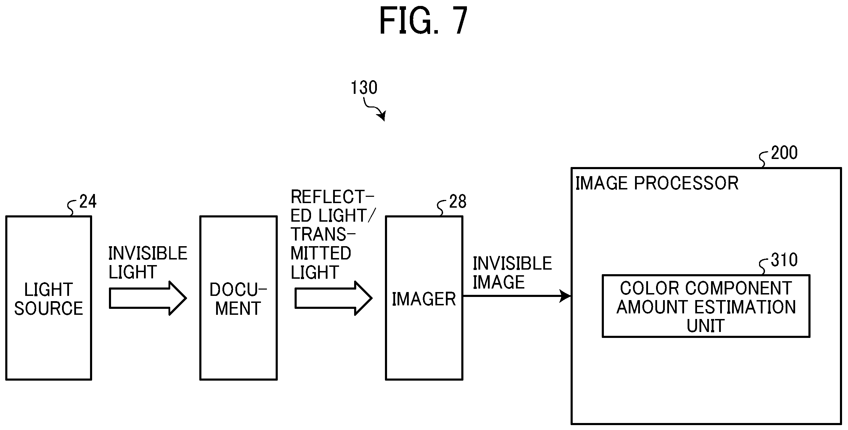

FIG. 7 is a diagram illustrating a functional configuration of the image reading device 130 according to the first embodiment. In this embodiment, characteristic functions of the present embodiment among functions exerted by the image reading device 130 will be described.

As illustrated in FIG. 7, the light source 24 emits invisible light to a document, which is an object. The imager 28 receives reflected invisible light from the document to capture an invisible image. The imager 28 includes an image sensor having sensitivity to invisible light, for example, having a sensitivity peak around 850 nm.

The image processor 200 receives the invisible image captured by the imager 28. The imager 28 may receive invisible light that has been transmitted through the document instead of the reflected invisible light from the document, to capture an invisible image. The invisible light according to the present embodiment may be, for example, near-infrared light. In this case, the invisible image captured by the imager 28 is a near-infrared image.

The image processor 200 includes, as a functional block element or a functional unit, a color component amount estimation unit 310. In the present embodiment, for example, the controller ASIC 208 includes the functional unit. The configuration is not limited to this example, and the functional unit may be implemented by execution of a program by the CPU 201 (circuitry).

Based on the invisible image received from the imager 28, the color component amount estimation unit 310 estimates an amount of a first color component that is included in the object and absorbs invisible light. The amount of the first color component may be referred to as a first color component amount below. The first color component included in the object is, for example, a color component included in a colorant used in image formation on the object. For example, when the colorant is carbon black, the color component is carbon.

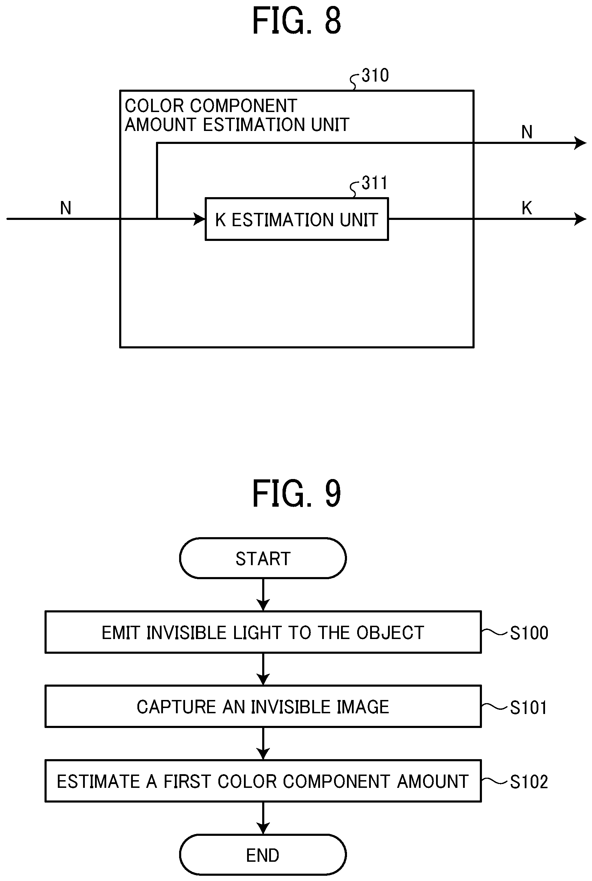

FIG. 8 is a diagram illustrating data processing performed by the color component amount estimation unit 310 according to the first embodiment. As illustrated in FIG. 8, the color component amount estimation unit 310 includes a K estimation unit 311 that estimates or calculates a color component amount K of carbon that absorbs invisible light from an invisible component N of an invisible image.

The color component amount K is an example of an amount of a first color component.

The invisible component N is a value related to a pixel value at a position of interest in the invisible image. The position of interest may be either a pixel of interest represented in units of pixels of the invisible image or a block of interest represented in units of blocks that are sets of pixels. When the position of interest is represented in units of pixels, the invisible component N is a pixel value of a pixel of interest. When the position of interest is represented in units of blocks, the invisible component N is an average value of pixel values of pixels included in a block of interest, for example.

The color component amount estimation unit 310 estimates the color component amount K as the first color component amount.

The color component amount estimation unit 310 outputs the input invisible component N together with the estimated first color component amount. The color component amount K and the invisible component N are each represented as an 8-bit value ranging from 0 to 255.

For example, the K estimation unit 311 calculates the value of the color component amount K using Equation (1) below to estimate the value of the color component amount K. $K = a \times N + b$ (1)

In Equation (1), "a" and "b" are coefficients predetermined by experiments, for example. As the value of the color component amount K increases, more invisible light is absorbed. Thus, the invisible component N decreases. Therefore, the coefficient "a" takes a negative value (a < 0). The coefficient "b" denotes an offset amount and b > 0 holds.

The K estimation unit 311 may calculate the value of the color component amount K using a function other than a linear function for the invisible component N. For example, the K estimation unit 311 may calculate the value of the color component amount K using a non-linear function or a lookup table (LUT) that determines the value of the color component amount K for each value of the invisible component N. The color component amount K and the invisible component N may each be represented as a value other than an 8-bit value.

FIG. 9 is a flowchart illustrating an example of a color component amount estimation process according to the first embodiment. In step S100, the light source 24 emits invisible light to the object. In step S101, the imager 28 captures an invisible image.

In step S102, based on the captured invisible image, the color component amount estimation unit 310 estimates the first color component amount.

As described above, according to the present embodiment, even when carbon black and CMY black exhibit similar spectral characteristics in the visible area, the use of the invisible component N allows the color component amount K of carbon to be accurately estimated.

### Second Embodiment

A second embodiment will be described below.

According to the present embodiment, using a visible image and the first color component amount, the color component amount estimation unit 310 further estimates an amount of a second color component that is included in the object and is different from the first color component. The amount of the second color component may be referred to as a second color component amount below. The second color component included in the object is, for example, a color component included in a colorant such as cyan, magenta, or yellow used in image formation on the object. Description of part of the second embodiment similar to that of the first embodiment will be omitted, and part of the second embodiment different from that of the first embodiment will be described.

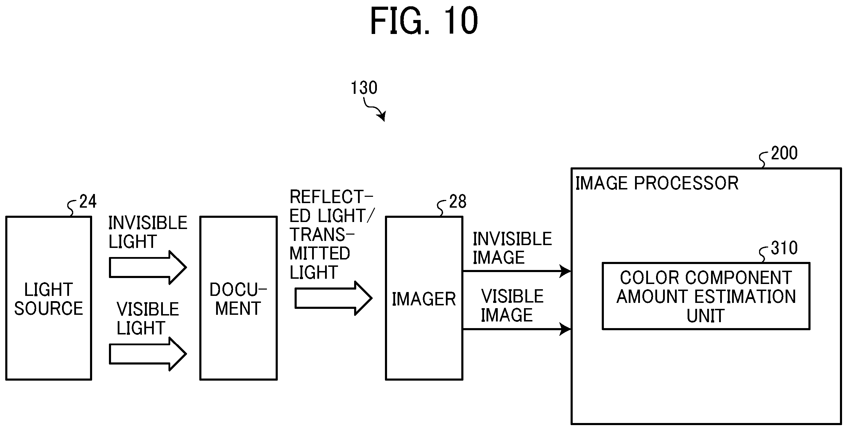

FIG. 10 is a diagram illustrating a functional configuration of the image reading device 130 according to the second embodiment. Differences between the second embodiment and the first embodiment are that the light source 24 further emits visible light, the imager 28 further captures a visible image, and the color component amount estimation unit 310 further estimates the second color component amount. The light source 24 may include a visible light source and an invisible light source separately or may include a single light source that emits visible light and invisible light. The imager 28 may include an image sensor having sensitivity to invisible light and an image sensor having sensitivity to visible light separately or may include a single image sensor that captures a visible image and an invisible image.

The visible image is an image captured by the imager 28 receiving visible light that has been reflected from the object or has been transmitted through the object. The visible image includes, for example, red (R), green (G), and blue (B) components, that is, visible components.

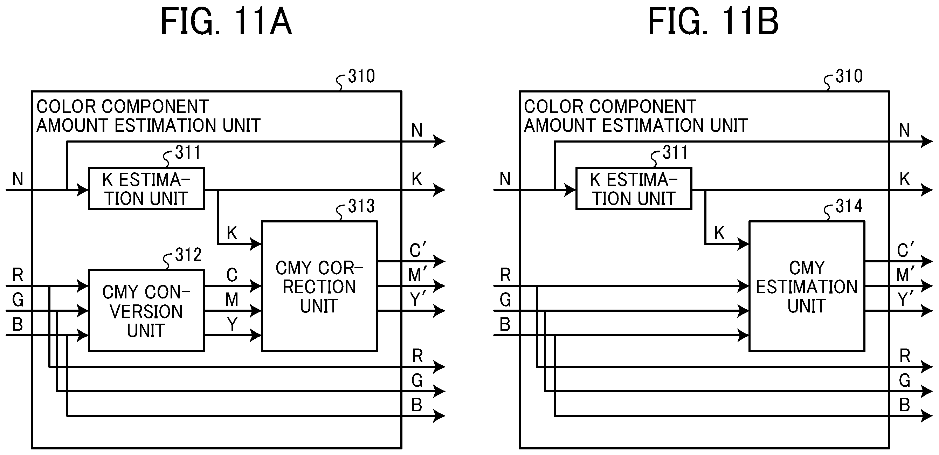

FIGs. 11A and 11B are diagrams illustrating data processing performed by the color component amount estimation unit 310 according to the second embodiment. As illustrated in FIG. 11A, the color component amount estimation unit 310 further includes a CMY conversion unit 312 and a CMY correction unit 313. The CMY conversion unit 312 converts visible components R, G, and B of a visible image into cyan, magenta, and yellow color component amounts C, M, and Y. The CMY correction unit 313 corrects the color component amounts C, M, and Y. As illustrated in FIG. 11B, instead of the CMY conversion unit 312 and the CMY correction unit 313, the color component amount estimation unit 310 may include a CMY estimation unit 314 that performs integrated processing of the processing performed by the CMY conversion unit 312 and the processing performed by the CMY correction unit 313.

The visible components R, G, and B are values related to a pixel value at a position of interest in the visible image. As in the case of the invisible image, the position of interest may be either a pixel of interest represented in units of pixels or a block of interest represented in units of blocks that are sets of pixels. When the position of interest is represented in units of pixels, the visible components R, G, and B are pixel values of a pixel of interest of the visible image. When the position of interest is represented in units of blocks, the visible components R, G, and B are average values of pixel values of pixels included in a block of interest of the visible image, for example.

The color component amount estimation unit 310 further estimates, as the second color component amount, the outputs C', M', and Y' of the CMY correction unit 313 illustrated in FIG. 11A or the outputs C', M', and Y' of the CMY estimation unit 314 illustrated in FIG. 11B. The color component amount estimation unit 310 outputs the input invisible component N and the input visible components R, G, and B together with the estimated first color component amount and the estimated second color component amount. The color component amount K, the input invisible component N, the outputs C', M', and Y', and the visible components R, G, and B are each represented as an 8-bit value ranging from 0 to 255. The color component amounts C', M', and Y' are each an example of an amount of a second color component.

For example, the CMY conversion unit 312 calculates the values of the color component amounts C, M, and Y respectively using Equations (2) to (4) below. $C = {a}_{11} \times R + {a}_{12} \times G + {a}_{13} \times B$ (2) $M = {a}_{21} \times R + {a}_{22} \times G + {a}_{23} \times B$ (3) $Y = {a}_{31} \times R + {a}_{32} \times G + {a}_{33} \times B$ (4)

In Equations (2) to (4), aᵢⱼ (where i, j = 1, 2, 3, -1 ≤ aᵢⱼ ≤ 1) is a coefficient of a masking operation for calculating the color component amounts C, M, and Y from the visible components R, G, and B.

For example, the CMY correction unit 313 calculates corrected values C', M', and Y' of the color component amounts C, M, and Y respectively using Equations (5) to (7) below. $C ′ = C + p \times K + q$ (5) $M ′ = M + p \times K + q$ (6) $Y ′ = Y + p \times K + q$ (7)

In Equations (5) to (7), "p" and "q" are coefficients predetermined by experiments, for example. Typically, the values C, M, and Y calculated using Equations (2) to (4) include the component K. Thus, as the value of the component K increases, the corrected values C', M', and Y' obtained by removing, more specifically, subtracting the component K decrease. Therefore, the coefficient "p" takes a negative value (p < 0). The coefficient "q" denotes an offset amount.

The CMY correction unit 313 may correct the values C, M, and Y using a function other than a linear function for the component K. For example, the CMY correction unit 313 may correct the values C, M, and Y using a non-linear function or a lookup table (LUT) that determines the values C, M, and Y for each value of the component K. The color component amount K, the invisible component N, the corrected values C', M', and Y', and the visible components R, G, and B may each be represented as a value other than an 8-bit value.

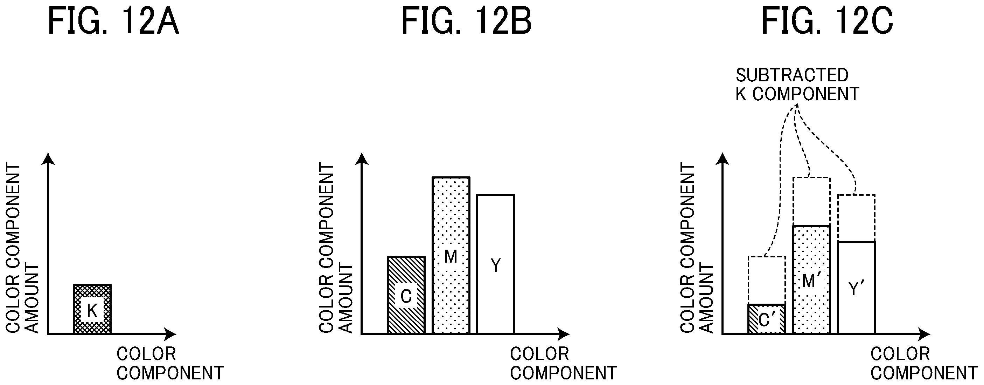

FIGs. 12A, 12B, and 12C are graphs illustrating examples of estimated color component amounts. FIG. 12A illustrates an example of the color component amount K calculated for a position of interest in an invisible image. FIG. 12B illustrates examples of the color component amounts C, M, and Y calculated for the position of interest in a visible image. FIG. 12C illustrates examples of the corrected color component amounts C', M', and Y' respectively obtained by correcting the values of the color component amounts C, M, and Y by subtraction based on the color component amount K.

Typically, when the saturation is high at the position of interest, the value of the color component amount K included in the visible components at the position is small. When the saturation is low at the position of interest, the value of the color component amount K included in the visible components at the position may be large. This is because the value of the color component amount K included in the visible components may become relatively large depending on the amount of carbon at the position of interest. According to the present embodiment, the color component amount of carbon is estimated from the invisible image and is used for correcting the values of the color component amounts C, M, and Y estimated from the visible components. This enables accurate estimation of the color component amounts.

For example, the CMY estimation unit 314 calculates estimated values of C', M', and Y' by a calculation formula obtained by respectively substituting C, M, and Y in Equations (2) to (4) above into Equations (5) to (7) above.

In the description above, the color component amount estimation unit 310 estimates the corrected color component amounts C', M', and Y' as the second color component amounts. However, the second color component amounts may be amounts for colors other than these three colors. For example, the color component amount estimation unit 310 may estimate two color component amounts C' and M' as the second color component amounts. The color component amount estimation unit 310 may estimate the second color component amounts by replacing any one of the three colors with another color such as non-carbon black or gold or adding another color to the three colors.

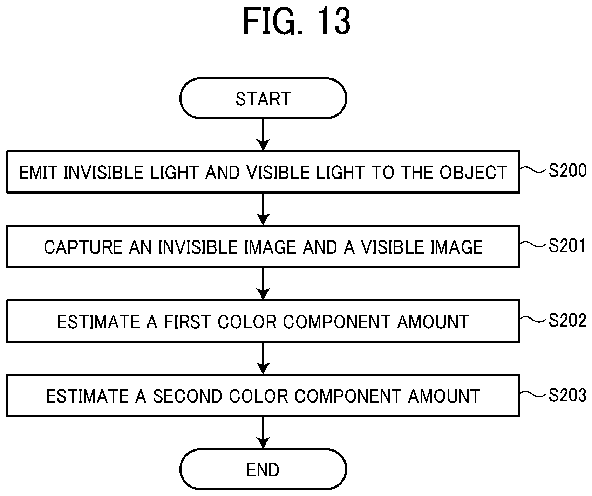

FIG. 13 is a flowchart illustrating an example of a color component amount estimation process according to the second embodiment. In step S200, the light source 24 emits invisible light and visible light to the object. In step S201, the imager 28 captures an invisible image and a visible image.

In step S202, based on the invisible image, the color component amount estimation unit 310 estimates the first color component amount. In step S203, based on the visible image and the first color component amount, the color component amount estimation unit 310 estimates the second color component amount.

As described above, according to the present embodiment, even when carbon black and CMY black exhibit similar spectral characteristics in the visible area, the use of the invisible component and the visible components allows the color component amount K of carbon and color component amounts of color components different from carbon to be accurately estimated.

### Third Embodiment

A third embodiment will be described below.

According to the present embodiment, identification related to an object is performed based on the first color component amount and the second color component amount. Description of part of the third embodiment similar to that of the second embodiment will be omitted, and part of the third embodiment different from that of the second embodiment will be described.

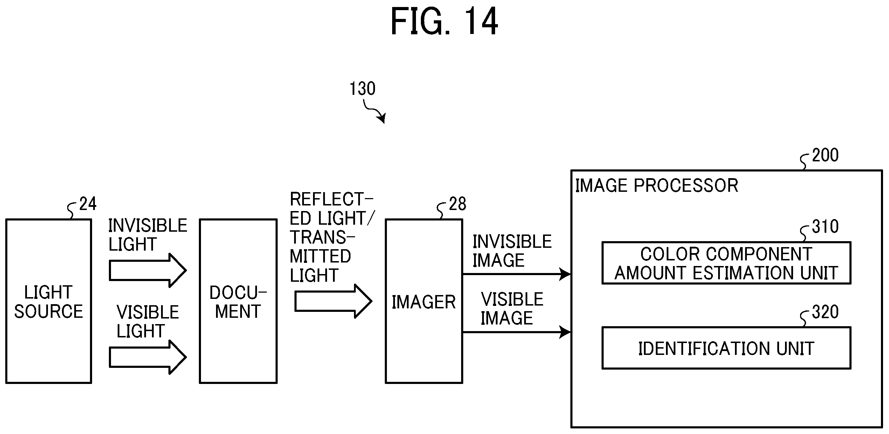

FIG. 14 is a diagram illustrating a functional configuration of the image reading device 130 according to the third embodiment. A difference between the third embodiment and the second embodiment is that the image processor 200 further includes an identification unit 320.

The identification unit 320 performs identification related to an object, based on color component amounts estimated by the color component amount estimation unit 310. Examples of the identification related to an object include identification of a recording material used in image formation on the object or identification of authenticity of the object. The recording material is a material used for recording information on a medium such as paper or a film. Examples of the recording material include a writing tool such as a pen or a pencil and a printing material such as toner or ink.

Identification of a recording material performed by the identification unit 320 will be described below.

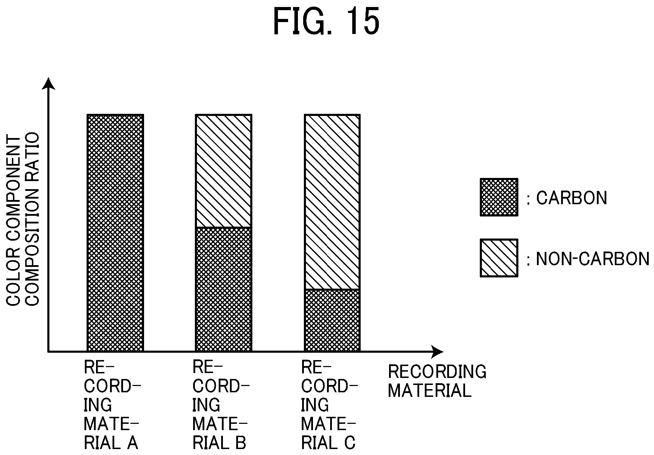

FIG. 15 is a graph illustrating an example of a color component composition ratio of each recording material. FIG. 15 presents, as the color component composition ratio, a ratio between the amounts of carbon (K) and non-carbon included in each recording material for reproducing black. The amount of non-carbon indicates the smallest color component amount among the color component amounts C', M', and Y' included in CMY black, for example.

In the example illustrated in FIG. 15, a recording material A is a recording material in which the ratio of the carbon amount is 100%, such as carbon black. In a recording material B and a recording material C, the ratio of the carbon amount is less than 100%. The recording material C has a larger ratio of the non-carbon amount than the recording material B. As described above, the color component composition ratio varies from recording material to recording material. Thus, for example, the use of the color component composition ratio for each formed character image enables identification of the recording material used in formation of the character image. Specifically, the color component composition ratios for respective recording materials are stored in a storage such as the HDD 211. The identification unit 320 compares the color component composition ratio of a formed character image with each of the stored color component composition ratios to identify the recording material used in image formation.

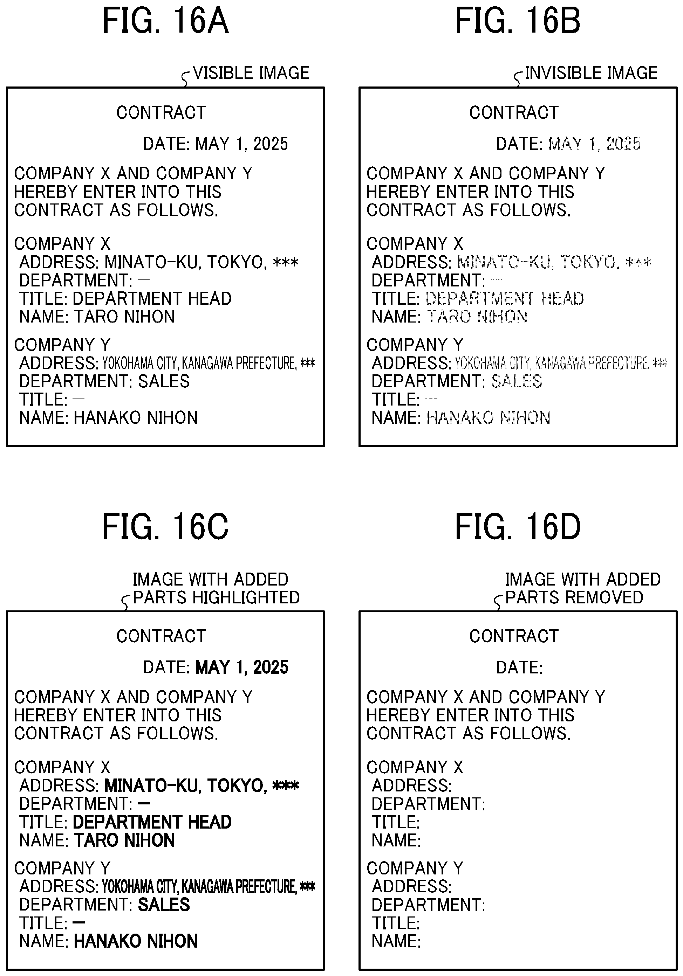

FIGs. 16A, 16B, 16C, and 16D are diagrams respectively illustrating examples of a visible image, an invisible image, an image with added parts highlighted generated from the visible image and the invisible image, and an image with added parts removed generated from the visible image and the invisible image. FIG. 16A illustrates an example of a visible image of a contract captured by the imager 28. FIG. 16B illustrates an example of an invisible image of the contract captured by the imager 28.

In the contract illustrated in FIGs. 16A to 16D, the original contract having blank fields such as date and address fields is formed, that is, printed using the recording material A in FIG. 15, and information such as the addresses and the date is formed, that is, added using the recording material B in FIG. 15.

The ratio of the carbon amount is smaller in the recording material B than in the recording material A. Thus, characters of added parts formed using the recording material B are faint as illustrated in FIG. 16B.

FIG. 16C illustrates an example of an image with added parts highlighted, in which the characters of the added parts are highlighted as being bold. The characters of the added parts are identified by the identification unit 320 as being formed using the recording material B.

Highlighting the added parts can prevent parts to be added from being overlooked.

FIG. 16D illustrates an example of an image with the added parts removed, in which the characters of the added parts are removed. Removing the added parts enables data of the original to be easily reproduced. Each of the added parts may be either a part added by handwriting or a part added by printing or typing.

Identification of authenticity of an object performed by the identification unit 320 will be described below.

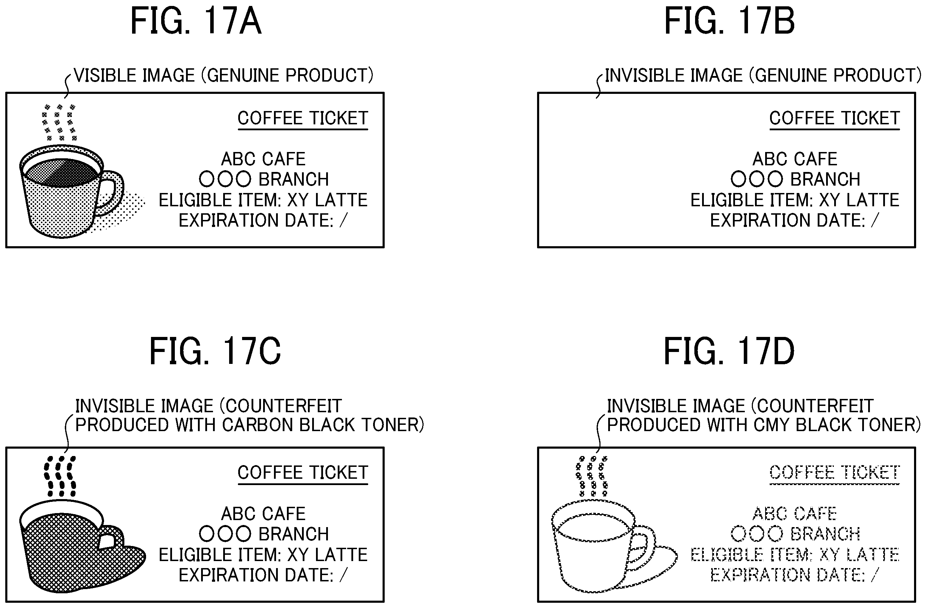

FIGs. 17A, 17B, 17C, and 17D are diagrams illustrating examples of read images of a genuine product and counterfeits. FIG. 17A illustrates an example of a visible image of a genuine coffee ticket captured by the imager 28. The coffee ticket includes an image pattern region in which an image of a cup of coffee is printed and a text region in which a target product and an expiration date are printed. The image pattern region is formed using the recording material C in FIG. 15, and the text region is formed using the recording material A in FIG. 15.

FIG. 17B illustrates an example of an invisible image of the genuine coffee ticket captured by the imager 28. The recording material C used in the image pattern region has a low carbon amount ratio. The image of the image pattern region is lost in the invisible image.

FIG. 17C illustrates an example of an invisible image of a counterfeit (copy), which is produced with carbon black toner, captured by the imager 28. In this counterfeit, both the image pattern region and the text region have a high ratio of carbon amount. Thus, in the invisible image, the image of the image pattern region remains although a detailed pattern is lost.

FIG. 17D illustrates an example of an invisible image of a counterfeit, which is produced with CMY black toner, captured by the imager 28. In this counterfeit, both the image pattern region and the text region have a low ratio of carbon amount. Thus, in the invisible image, both the image of the image pattern region and the image of the text region are faint.

The identification unit 320 identifies authenticity of the ticket, based on position information of the image pattern region and the text region in the ticket described above and the first color component amount (K) estimated by the color component amount estimation unit 310.

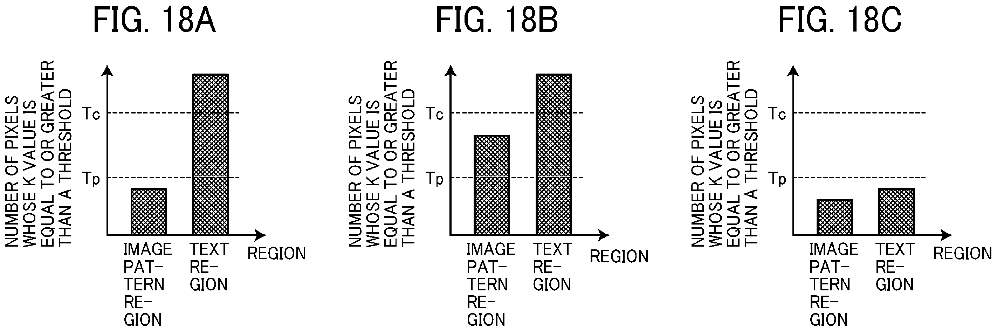

FIGs. 18A, 18B, and 18C are graphs illustrating the number of pixels whose K value is equal to or greater than a predetermined threshold for each region. FIG. 18A illustrates an example of the genuine product. FIG. 18B illustrates an example of the counterfeit produced with carbon black toner. FIG. 18C illustrates an example of the counterfeit produced with CMY black toner.

As illustrated in FIG. 18A, for the genuine product, the number of pixels whose K value is equal to or greater than the threshold is less than Tp in the image pattern region and is greater than Tc (Tc > Tp) in the text region. In contrast, as illustrated in FIG. 18B, for the counterfeit produced with carbon black toner, the number of pixels whose K value is equal to or greater than the threshold is greater than Tp in the image pattern region. As illustrated in FIG. 18C, for the counterfeit produced with CMY black toner, the number of pixels whose K value is equal to or greater than the threshold is less than Tc in the text region.

For each region, the identification unit 320 counts the number of pixels whose K value is equal to or greater than the threshold. When "the obtained number of pixels in the image pattern region is equal to or less than Tp and the obtained number of pixels in the text region is equal to or greater than Tc", the identification unit 320 identifies that the object is a genuine product; otherwise, the identification unit 320 identifies that the object is a counterfeit. The predetermined threshold, the value "Tp", and the value "Tc" are values predetermined by experiments, for example.

The identification unit 320 may identify authenticity based on the second color component amounts together with the first color component amount or instead of the first color component amount. For example, the identification unit 320 may count the number of pixels for which the carbon amount is greater than the non-carbon amount in each region, and identify authenticity based on the count results. Specifically, the number of pixels for which the carbon amount is greater than the non-carbon amount tends to be small in the image pattern region of the genuine product and large in the text region of the genuine product. Thus, authenticity is identifiable based on whether the object has the matching tendency. Alternatively, the identification unit 320 may count the number of pixels for which the non-carbon amount is greater than a predetermined threshold in each region, and identify authenticity based on the count results.

As described above, according to the present embodiment, even when carbon black and CMY black exhibit similar spectral characteristics in the visible area, the color component amount K of carbon and color component amounts of color components different from carbon can be accurately estimated. Based on the estimated color component amounts, identification related to the object can be performed.

### Fourth Embodiment

A fourth embodiment will be described below.

According to the present embodiment, image data is generated based on at least one of the first color component amount and the second color component amount. Description of part of the fourth embodiment similar to that of the second embodiment will be omitted, and part of the fourth embodiment different from that of the second embodiment will be described below.

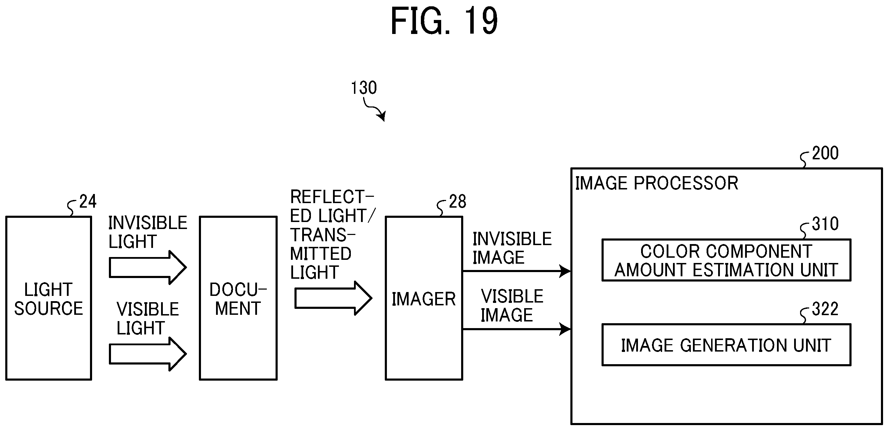

FIG. 19 is a diagram illustrating a functional configuration of the image reading device 130 according to the fourth embodiment. A difference between the fourth embodiment and the second embodiment is that the image processor 200 further includes an image generation unit 322.

The image generation unit 322 generates image data, based on at least one of the first color component amount and the second color component amount. For example, when the color component amount estimation unit 310 estimates the first color component amounts for respective pixels of an invisible image, the image generation unit 322 generates an image having the first color component amounts as pixel values, that is, an image in which each pixel has K as a component of the pixel value. When the color component amount estimation unit 310 estimates the second color component amounts for respective pixels of a visible image, the image generation unit 322 generates an image having the second color component amounts as pixel values, that is, an image in which each pixel has C', M', and Y' as components of the pixel value. The image generation unit 322 may generate, from the invisible image and the visible image, an image having the first color component amounts and the second color component amounts as pixel values, that is, an image in which each pixel has K, C', M', and Y' as components of the pixel value.

The image generated by the image generation unit 322 may be stored as scan data in a storage such as the HDD 211. The image may be transmitted to a destination designated with the operation unit 150 of the image reading device 130, for example. The destination may be an email address or a folder on a network.

The stored image may be further printed by the plotter 140 with high color reproducibility.

As described above, according to the present embodiment, even when carbon black and CMY black exhibit similar spectral characteristics in the visible area, the color component amount K of carbon and color component amounts of color components different from carbon can be accurately estimated. Based on the estimated color component amounts, image data can be generated.

### Fifth Embodiment

A fifth embodiment will be described below.

According to the present embodiment, the image reading device 130 according to each of the first to fourth embodiments is used in a sorting apparatus that sorts a conveyance target object, which is an object. Description of part of the fifth embodiment similar to those of the first to fourth embodiments will be omitted, and part of the fifth embodiment different from those of the first to fourth embodiments will be described below.

In recent years, in fields of distribution and logistics, read images of conveyance target objects have come to be used for increasing operational efficiency. For example, a recording material such as toner or ink may be conveyed in a toner bottle or an ink cartridge in a factory. For example, the recording material to be conveyed has multiple types such as pigment black and dye black. Pigment black produces clear characters and colors, and is therefore suitable for printing text and drawings. In contrast, dye black has vivid coloring, and is therefore suitable for printing photographs. The sorting apparatus according to the present embodiment sorts conveyance target objects containing respective recording materials for different uses, using read images such as invisible images and visible images obtained by the image reading device 130.

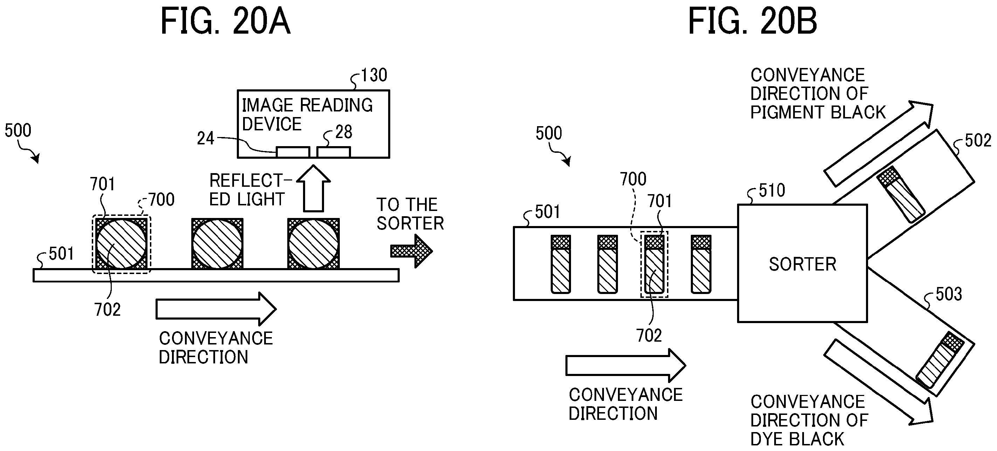

FIGs. 20A and 20B are diagrams illustrating an example of a configuration of a sorting apparatus 500 according to the fifth embodiment. The sorting apparatus 500 includes the image reading device 130, belt conveyors 501 to 503, and a sorter 510. The sorting apparatus 500 captures, with the image reading device 130, images of multiple objects 700 conveyed on the belt conveyor 501, and switches and sorts, with the sorter 510, each of the objects 700 to a corresponding conveyance direction, based on the corresponding one of the captured images.

FIG. 20A is a lateral view of the sorting apparatus 500. In FIG. 20A, illustrations of the sorter 510 and the belt conveyors 502 and 503 are omitted. FIG. 20B is a top view of the sorting apparatus 500. In FIG. 20B, an illustration of the image reading device 130 is omitted. In FIG. 20B, the belt conveyor 502 conveys the object 700 identified as pigment black, and the belt conveyor 503 conveys the object 700 identified as dye black.

The objects 700 are, for example, toner bottles each including a cap 701 and a bottle 702. The bottle 702 is transparent so that the inside of the bottle 702 can be seen. The image reading device 130 includes the light source 24 and the imager 28. The image reading device 130 can receive reflected light from the toner in the bottle 702 and capture an invisible image and a visible image. The bottle 702 may be non-transparent. In such a case, for example, a toner sample in a transparent bag or paper printed with the toner is affixed to an upper portion of the object 700. The image reading device 130 captures an image of the affixed toner sample or paper to acquire the image.

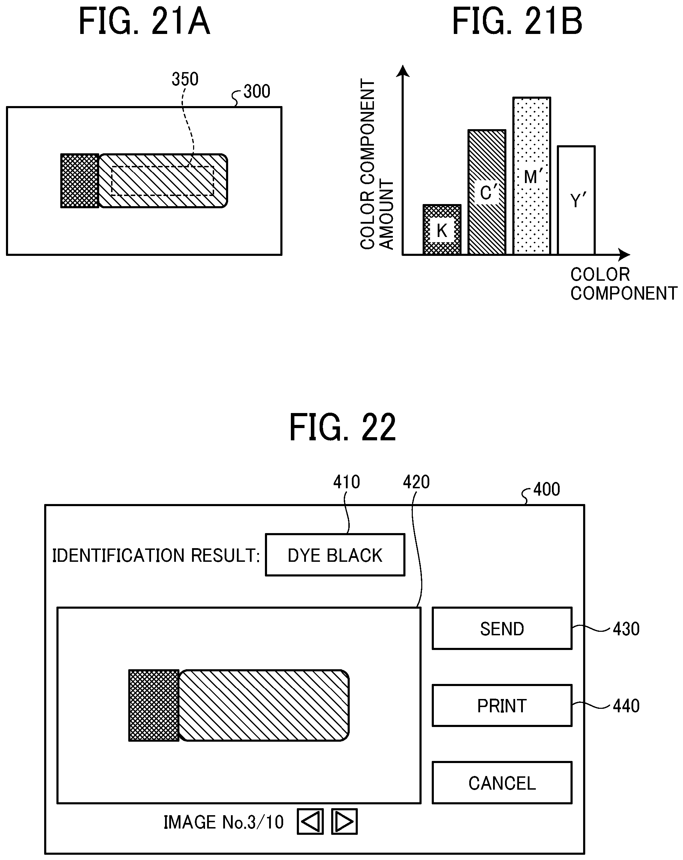

FIG. 21A is a diagram illustrating a captured image. FIG. 21B is a graph illustrating an example of estimated color component amounts. As illustrated in FIG. 21A, a captured image 300, which is an invisible image or a visible image, includes an image of the object 700 conveyed on the belt conveyor 501. As described above, the color component amount estimation unit 310 estimates color component amounts K, C', M', and Y', based on the invisible component N and the visible components R, G, and B at a position of interest 350 of the image 300. The position of interest 350 is, for example, a captured image block of toner in the image 300.

FIG. 21B illustrates an example of the color component amounts estimated by the color component amount estimation unit 310. This example indicates that the toner of the object 700 is dye black toner having a larger ratio of C', M', and Y' than K.

Based on at least one of the first color component amount and the second color component amounts, the sorter 510 identifies whether the toner of the object 700 is pigment black or dye black. The sorter 510 then switches the conveyance direction in accordance with the identification result and sorts the object 700 as illustrated in FIG. 20B.

For example, when the first color component amount is greater than a predetermined threshold, the sorter 510 identifies the toner as pigment black. When the first color component amount is not greater than the predetermined threshold, the sorter 510 identifies the toner as dye black. Alternatively, when the ratio of the second color component amounts to the first color component amount is greater than a predetermined threshold, the sorter 510 may identify the toner as dye black. When the ratio of the second color component amounts to the first color component amount is not greater than the predetermined threshold, the sorter 510 may identify the toner as pigment black. Alternatively, when the second color component amounts are greater than a predetermined threshold, the sorter 510 may identify the toner as dye black. When the second color component amounts are not greater than the predetermined threshold, the sorter 510 may identify the toner as pigment black.

The identification result obtained by the sorter 510 may be displayed on a display screen of the operation unit 150 of the image reading device 130, for example. FIG. 22 is a diagram illustrating an example of a screen 400 displaying the identification result. As illustrated in FIG. 22, the screen 400 includes a result region 410, an image region 420, a send button 430, and a print button 440.

The result region 410 displays the identification result obtained by the sorter 510. The image region 420 displays an image of the object 700 corresponding to the identification result displayed in the result region 410. In the example illustrated in FIG. 22, the toner is identified as dye black for the object 700 with image No. 3/10.

A user presses the send button 430 to send information on the identification result and the image of the object 700 to a destination specified in advance by the user, for example. The user presses the print button 440 to print the information on the identification result and the image of the object 700.

As described above, according to the present embodiment, the image reading device 130 according to each of the first to fourth embodiments is used in the sorting apparatus 500 that sorts objects. This enables accurate estimation of the color component amount and enables sorting of the objects.

According to each of the embodiments described above, an image of an object being conveyed is captured by a fixed imager. Conversely, the imager may move and capture an image of a stationary object.

According to the first to fourth embodiments, an example in which the image reading device 130 is applied to an MFP having at least two functions among the copy function, the printer function, the scanner function, and the facsimile function has been described. However, the image reading device 130 is applicable to any apparatus such as a copier, a printer, a scanner, or a facsimile machine.

The programs executed by the image forming apparatus 100, the image reading device 130, and the sorting apparatus 500 according to the embodiments may be recorded on and provided through a computer-readable recording medium such as a compact disc-read-only memory (CD-ROM), a flexible disk (FD), a compact disc-recordable (CD-R), or a digital versatile disc (DVD), in an installable or executable file format.

The programs executed by the above-described apparatuses and device according to the embodiments may be stored on a computer connected to a network such as the Internet and may be downloaded and provided via the network. The programs executed by the above-described apparatuses and device according to the embodiments may be provided or distributed via a network such as the Internet.

The programs according to the embodiments may be preinstalled and provided on a memory such as a ROM.

The programs executed by the apparatuses and device according to the embodiments have a module configuration including the functional units described above. The CPU or processor that is actual hardware reads the programs from the recording medium and executes the programs, so that the above-described functional units are loaded to a main storage device and are generated in the main storage device.

Each of the functions of any one of the above-described embodiments can be implemented by one or more processing circuits or circuitry. As used herein, the term "processing circuit or circuitry" includes processors programmed to implement each function by software, such as a processor implemented by an electronic circuit, and devices designed to implement the functions described above, such as an application-specific integrated circuit (ASIC), a digital signal processor (DSP), a field-programmable gate array (FPGA), and existing circuit modules.

An image reading device (130) includes a light emitter (24), an imager (28), and a color component amount estimation unit (310). The light emitter (24) is configured to emit invisible light to an object. The imager (28) is configured to receive the invisible light, reflected from the object or transmitted through the object, and captures an invisible image based on the invisible light received. The color component amount estimation unit (310) is configured to estimate a color component amount that absorbs invisible light, based on an invisible component of the invisible image of the object. The invisible component corresponds to a value related to a pixel value at a specified position in the invisible image.

In the image reading device (130), the light emitter (24) is configured to further emit visible light to the object. The imager (28) receives the visible light, reflected from the object or transmitted through the object, and captures a visible image based on the visible light received. The color component amount estimation unit (310) is further configured to estimate another color component amount different from the color component amount, based on the color component amount estimated and a visible component of the visible image of the object. The visible component corresponds to a value related to a pixel value at a specified position in the visible image.

In the image reading device (130), the color component amount estimation unit (310) is configured to calculate said another color component amount based on the visible image and subtract, from said another color component amount, the color component amount based on the invisible image, to correct said another color component amount and obtain a corrected color component amount.

In the image reading device (130), the light emitter (24) emits the invisible light including near-infrared light, and the imager (28) captures the invisible image including a near-infrared image.

The image reading device (130) further includes an identification unit (320) configured to identify a recording material that forms an image on the object, based on the color component amount based on the invisible image and said another color component amount based on the visible image.

The image reading device (130) further includes an identification unit (320) configured to identify authenticity of the object based on at least one of the color component amount or said another color component amount.

The image reading device (130) further includes an image generation unit (322) configured to generate image data, based on at least one of the color component amount or said another color component amount.

An image forming apparatus (100) includes the image reading device (130) and an image forming device (140) configured to print image data processed by the image reading device (130).

A sorting apparatus (500) includes the image reading device (130) and a sorter (510) configured to sort the object, based on an image captured by the image reading device (130).

An image reading method to be executed by an image reading device (130), includes emitting (S100) invisible light to an object; receiving (S101) the invisible light, reflected from the object or transmitted through the object; capturing an invisible image based on the invisible light received; and estimating (S102) a color component amount that absorbs invisible light, based on an invisible component of the invisible image of the object. The invisible component corresponds to a value related to a pixel value at a specified position in the invisible image.

Although some embodiments of the present disclosure have been described above, the above-described embodiments are presented as examples and are not intended to limit the scope of the present disclosure. Such novel embodiments may be carried out in various other modified forms. Various combinations, omissions, substitutions, and changes may be made without departing from the gist of the present disclosure. Such novel embodiments and modifications thereof are within the scope and gist of the present disclosure and are also within the scope of the claims and the equivalent thereof. The elements of different embodiments and modifications may be combined with each other as appropriate.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

Aspects of the present disclosure are, for example, as follows.

According to Aspect 1, an image reading device includes a light emitter, an imager, and a color component amount estimation unit. The light emitter emits invisible light to an object. The imager receives the invisible light that has been reflected from the object or has been transmitted through the object and captures an invisible image. The color component amount estimation unit estimates an amount of a first color component that is included in the object and absorbs invisible light, based on an invisible component that is a value related to a pixel value at a position of interest in the invisible image.

According to Aspect 2, in the image reading device of Aspect 1, the light emitter further emits visible light to the object. The imager further receives the visible light that has been reflected from the object or has been transmitted through the object and captures a visible image. The color component amount estimation unit further estimates an amount of a second color component that is included in the object and is different from the first color component, based on the visible image and the amount of the first color component.

According to Aspect 3, in the image reading device of Aspect 2, the amount of the second color component includes a corrected amount obtained by correcting an amount of a color component by subtraction based on the amount of the first color component. The amount of the color component is calculated from the visible image.

According to Aspect 4, in the image reading device of Aspect 2 or 3, the invisible light includes near-infrared light, and the invisible image includes a near-infrared image.

According to Aspect 5, in the image reading device of any one of Aspects 2 to 4, a recording material used in image formation on the object is identified based on the amount of the first color component and the amount of the second color component.

According to Aspect 6, in the image reading device of any one of Aspects 2 to 4, authenticity of the object is identified based on at least one of the amount of the first color component and the amount of the second color component.

According to Aspect 7, the image reading device of any one of Aspects 2 to 4 further includes an image generation unit. The image generation unit generates image data, based on at least one of the amount of the first color component and the amount of the second color component.

According to Aspect 8, an image forming apparatus includes the image reading device of any one of Aspects 1 to 7 and an image forming device. The image forming device prints image data that has been processed by the image reading device.

According to Aspect 9, a sorting apparatus includes the image reading device of any one of Aspects 1 to 7 and a sorter. The sorter sorts the object, based on an image captured by the image reading device.

According to Aspect 10, an image reading method to be executed by an image reading device includes emitting invisible light to an object; receiving the invisible light that has been reflected from the object or has been transmitted through the object and capturing an invisible image; and estimating an amount of a first color component that is included in the object and absorbs invisible light, based on an invisible component that is a value related to a pixel value at a position of interest in the invisible image.

## Claims

1. An image reading device (130) comprising:
a light emitter (24) configured to emit invisible light to an object;
an imager (28) configured to:
receive the invisible light:
reflected from the object; or
transmitted through the object; and
capture an invisible image based on the invisible light received; and
a color component amount estimation unit (310) configured to:
estimate a color component amount that absorbs invisible light,
based on an invisible component of the invisible image of the object,
wherein the invisible component corresponds to a value related to a pixel value at a specified position in the invisible image.

2. The image reading device (130) according to claim 1, wherein:
the light emitter (24) is configured to further emit visible light to the object,
the imager (28):
receives the visible light:
reflected from the object; or
transmitted through the object; and
captures a visible image based on the visible light received, and
the color component amount estimation unit (310) is further configured to estimate another color component amount different from the color component amount, based on:
the color component amount estimated; and
a visible component of the visible image of the object,
wherein the visible component corresponds to a value related to a pixel value at a specified position in the visible image.

3. The image reading device (130) according to claim 2, wherein:
the color component amount estimation unit (310) is configured to:
calculate said another color component amount based on the visible image; and
subtract, from said another color component amount, the color component amount based on the invisible image,
to correct said another color component amount and obtain a corrected color component amount.

4. The image reading device (130) according to claim 2 or 3, wherein
the light emitter (24) emits the invisible light including near-infrared light, and
the imager (28) captures the invisible image including a near-infrared image.

5. The image reading device (130) according to claim 2, further comprising an identification unit (320) configured to identify a recording material that forms an image on the object, based on:
the color component amount based on the invisible image; and
said another color component amount based on the visible image.

6. The image reading device (130) according to claims 2 to 4, further comprising an identification unit (320) configured to identify authenticity of the object based on at least one of:
the color component amount; or
said another color component amount.

7. The image reading device (130) according to any one of claims 2 to 4, further comprising:
an image generation unit (322) configured to generate image data, based on at least one of:
the color component amount; or
said another color component amount.

8. An image forming apparatus (100) comprising:
the image reading device (130) according to any one of claims 1 to 7; and
an image forming device (140) configured to print image data processed by the image reading device (130).

9. A sorting apparatus (500) comprising:
the image reading device (130) according to any one of claims 1 to 7; and
a sorter (510) configured to sort the object, based on an image captured by the image reading device (130).

10. An image reading method to be executed by an image reading device (130), comprising:
emitting (S100) invisible light to an object;
receiving (S101) the invisible light:
reflected from the object; or
transmitted through the object;
capturing an invisible image based on the invisible light received; and
estimating (S102) a color component amount that absorbs invisible light, based on an invisible component of the invisible image of the object,
wherein the invisible component corresponds to a value related to a pixel value at a specified position in the invisible image.
